# EUROPÄISCHE PATENTSCHRIFT

(11) **EP 0 370 184 B1**
(45) Veröffentlichungstag und Bekanntmachung des Hinweises auf die Patenterteilung: **08.12.1993**
(21) Anmeldenummer: 89116364.4
(22) Anmeldetag: 05.09.1989
(51) Int. Cl.: F23G 5/20, F23G 5/16

(54) **Vorrichtung zur Verbrennung von Haus- und Sondermüll**
Device for the combustion of municipal and industrial waste
Dispositif pour la combustion de déchets ménagers et industriels

(30) Priorität: 23.11.1988 DE 3839503
(43) Veröffentlichungstag der Anmeldung: 30.05.1990
(73) Patentinhaber: KOMMANDITGESELLSCHAFT AVG ABFALL-VERWERTUNGS-GESELLSCHAFT mbH & Co., 22589 Hamburg (DE)
(72) Erfinder: Dirrigl, Hans Albert, D-2150 Buxtehude (DE)
(74) Vertreter: Leyh, Hans, Dr.-Ing.

(56) Entgegenhaltungen:
- EP-A- 0 044 063
- EP-A- 0 198 758
- WO-A-88/02834
- WO-A-88/04753
- US-A- 4 162 686

## Beschreibung

Die Erfindung befaßt sich mit einer Vorrichtung zur Verbrennung von Haus- und Sondermüll, welche einen Drehrohrofen, der in einen Abhitzekessel einmündet, wobei zwischen dem Außenumfang des Drehrohrofens und der Öffnung im Abhitzekessel ein Ringspalt für die Zufuhr von Sekundärluft in den Kessel vorhanden ist, und eine dem Abhitzekessel nachgeschaltete Reinigungsanlage für die Abgase aufweist.

Aus WO 88/04753 ist eine Verbrennungsanlage mit einem Drehrohrofen der vorstehend genannten Art bekannt. Hierbei soll eine Luftsteuerung für den Drehrohrofen bereitgestellt werden, mittels der sich die von der Zufuhr von zuviel Luft sich ergebenden Abgase minimieren lassen, und welche eine selektive Steuerung der Unterfeuerungsluft und der Überfeuerungsluft sowie die Bildung einer Zonensteuerung des Luftstroms für unterschiedliche Verbrennungsstufen zur Erzielung einer effizienten Verbrennung gestattet.

Ferner ist es aus EP-A-0198758 und WO 88/02834 bekannt, bei einer Kohlefeuerung mit einem Rost und nachgeschaltetem Abhitzekessel die Abgase im unteren Bereich des Kessels mit Hilfe von Brennern zu durchmischen.

Die Abgase von Vorrichtungen zur Verbrennung von Haus- und Sondermüll enthalten u.a. Kohlenmonoxid, dessen Anteil möglichst klein gehalten werden sollte. Nach den Bestimmungen wird ein Kohlenmonoxidgehalt im Reingas von weniger als 100 mg/m³ gefordert. Die Sauerstoffgehalte im Abhitzekessel betragen etwa 10%, und die Rauchgastemperaturen im unteren Bereich desselben liegen regelmäßig oberhalb von 800°C. Der Sauerstoff stammt aus der Verbrennung im Drehrohrofen und aus der über den Ringspalt zwischen dem Außenumfang des Drehrohrofens und der Öffnung im Abhitzekessel zugeführten Sekundärluft. Es hat sich aber gezeigt, daß im Abgas eine Strähnenbildung auftritt und daher die Vermischung der Abgase mit dem Luftsauerstoff unzureichend ist.

Der Erfindung liegt die Aufgabe zu Grunde, den CO-Gehalt in den Abgasen einer Vorrichtung zur Verbrennung von Haus- und Sondermüll der gattungsgemäßen Art zu reduzieren.

Nach der Erfindung wird hierzu eine Vorrichtung zur Verbrennung von Haus- und Sondermüll bereitgestellt, deren Merkmale im Anspruch 1 angegeben sind.

Bei der erfindungsgemäßen Vorrichtung werden in dem dem Drehrohr nachgeschalteten Abhitzekessel Verbrennungsgase von Hochgeschwindigkeitsbrennern eingeblasen, um die Abgase im Abhitzekessel intensiv durchzumischen. Die Einströmungsgeschwindigkeit dieser Verbrennungsgase liegt bei etwa 100 ms und größer. Diese Verbrennungsgase werden zweckmäßigerweise quer zur Strömungsrichtung der Abgase in den Abhitzekessel geblasen.

Weitere vorteilhafte Ausgestaltungen der Erfindung sind in den Ansprüchen 2-9 wiedergegeben.

Die Erfindung wird nachstehend an Hand von bevorzugten Ausführungsformen unter Bezugnahme auf die beigefügte Zeichnung näher erläutert. Darin zeigt:
- Fig. 1: eine schematische Ansicht des in den ersten Kesselzug eines Abhitzekessels hineinragenden Endes eines Drehrohrofens, und
- Fig. 2: eine Schnittansicht längs der Linie II-II in Fig. 1.

Die Temperaturen im ersten Strahlungszug des Kessels betragen direkt oberhalb des Drehrohrofenendes gegenwärtig etwa 1000°C - 1500°C, in der Mitte des Zuges etwa 750 - 850°C und am oberen Ende im Umlenkbereich des Zuges etwa 600 - 700°C. Diese Temperaturen schwanken abhängig von der Müllzusammensetzung, der Ofenfahrweise und dem Verschmutzungsgrad des Kessels.

Diese Temperaturen lassen jedoch mechanische Umwälzeinrichtungen weitgehend unzweckmäßig erscheinen, insbesondere auch aus Gründen der Betriebssicherheit.

Die Abgase werden mit Hilfe von Hochgeschwindigkeitsbrennern durchgemischt.

Unter Hochgeschwindigkeitsbrennern sind Brenner zu verstehen, bei denen die Verbrennung in einer am Brenner montierten Brennkammer erfolgt und die Verbrennungsgase durch eine Düse mit Geschwindigkeiten von 100 m/s und mehr in den Kessel bzw. Kesselzug einströmen.

Durch den hohen Austrittsimpuls der aus den Brennern austretenden Verbrennungsgase werden die durch den Kessel strömenden Abgase oder Rauchgase angesaugt und kräftig durchgemischt, um eine möglichst weitgehende Reaktion von CO mit O₂ zu erreichen.

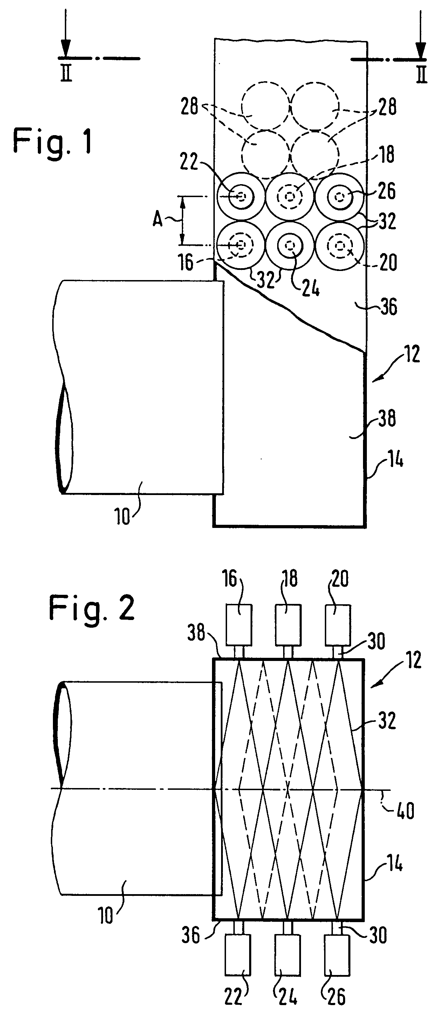

Fig. 1 zeigt nun schematisch das Ende eines Drehrohrofens 10, das etwas in den ersten Strahlenzug oder Kesselzug 14 eines allgemein mit 12 bezeichneten Kessels hineinragt. Zwischen dem Außenumfang des Drehrohrofens 10 und der Öffnung im Kesselzug 14 ist ein Ringspalt von z.B. 10 - 40 mm Breite vorhanden, der in Fig. 1 jedoch nicht dargestellt ist und durch den Sekundärluft in den Kessel 12 eintritt.

Die Abgase aus dem Drehrohrofen 10 strömen im Kesselzug 14 vertikal von unten nach oben und sie werden im Kesselzug 14 unter sich und mit der Sekundärluft kräftig durchgemischt.

Oberhalb des Eintrittsendes des Drehrohrofens 10 in den Kesselzug 14, zweckmäßigerweise unmittelbar oberhalb, sind Hochgeschwindigkeitsbrenner 16, 18, 20, 22, 24, 26 angeordnet, die in den beiden sich gegenüberliegenden Seitenwänden 36, 38 des Kesselzuges 14 montiert und installiert sind.

Im dargestellten Beispiel sind in jeder Seitenwand des Kesselzuges 14 drei Brenner eingebaut, so z.B. die Brenner 16, 18, 20 in der Seitenwand 38 und die Brenner 22, 24, 26 in der Seitenwand 36 des Kesselzuges 14.

Die Brenner 16, 18, 20 liegen somit den Brennern 22, 24, 26 gegenüber und die aus ihren Düsen 30 austretenden Verbrennungsgasstrahlen sind aufeinanderzugerichtet.

In vertikaler Richtung sind die einzelnen Brenner höhenversetzt zueinander angeordnet; so können beispielsweise die Brenner 16, 18, 20 in einer Ebene liegen, während die Brenner 22, 24, 26 in einer anderen höheren Ebene liegen können.

Es hat sich ferner gezeigt, daß es zweckmäßig ist, auch die Brenner, die an einer der beiden Wände 36 oder 38 installiert sind, höhenversetzt zueinander anzuordnen, wie Fig. 1 zeigt.

So liegen die Brenner 16 und 20, die in der Wand 38 installiert sind, in einer horizontalen Ebene, der zwischen den Brennern 16 und 20 angeordnete Brenner 18 liegt jedoch in einer höheren Ebene. Entsprechendes gilt für die Brenner 22, 24, 26, die in der Wand 36 des Kesselzuges 14 installiert sind, wobei hier die Brenner 22 und 26, wie Fig. 1 zeigt, in der oberen Ebene liegen, während der Brenner 24, der zwischen den beiden Brennern 22, 26 in der Wand 36 eingebaut ist, in der unteren Ebene angeordnet ist.

Sowohl der vertikale als auch der horizontale Abschnitt der Brenner voneinander kann abhängig von den Strahlkegeln 32 der aus den Brennerdüsen 30 austretenden Verbrennungsgase gewählt werden.

Messungen haben ergeben, daß der Öffnungswinkel dieser Strahlkegel 32 etwa 20° beträgt.

Der horizontale Abstand der Brenner voneinander kann nun zweckmäßigerweise so gewählt werden, daß sich die Strahlkegel 32 etwa in der Mittelebene 40 des Kesselzuges 14 gerade treffen bzw. überschneiden.

Entsprechendes gilt für den vertikalen Abstand A der beiden Brennergruppen voneinander.

Die Mittelachsen der Brennerdüsen 30 (und damit die Mittelachsen der Strahlkegel 32) verlaufen vorzugsweise horizontal und rechtwinklig zu der jeweiligen Seitenwand 36 bzw. 38.

Es wird aber betont, daß dies nicht der Fall zu sein braucht, d.h. diese Mittelachsen der Brennerdüsen 30 bzw. der Strahlkegel 32 können auch in einem spitzen Winkel zur Horizontalen nach oben oder nach unten geneigt verlaufen, außerdem können sie einen von 90° abweichenden Winkel zur jeweiligen Seitenwand 36 bzw. 38 bilden. (Die Bezeichnung "horizontal" bezieht sich darauf, daß der Kesselzug 14 vertikal angeordnet ist und die Abgase aus dem Drehrohrofen 10 vertikal von unten nach oben strömen).

Mit dieser Anordnung der Brenner 16 - 26, deren horizontaler und deren vertikaler Abstand praktisch dem Strahldurchmesser in der Mitte des Kesselzuges 14 entspricht, wird bereits eine sehr gute Durchmischung des im Kesselzug 14 von unten nach oben strömenden Abgases erzielt, da durch diese Anordnung bereits ein sehr großer Teil der Querschnittsfläche des Kesselzuges erfaßt ist. Durch die wechselseitige Versetzung der einzelnen Brenner wird eine häufige Umlenkung der im Kesselzug 14 aufströmenden Abgase erreicht und damit die Vermischung und Reaktion intensiviert. Vorzugsweise sind die Brenner möglichst nahe, d.h. unmittelbar oberhalb dem Austritt des Drehrohrofens 10 angeordnet, wodurch erreicht wird, daß die Sekundärluft bei möglichst hoher Temperatur von den Brennerstrahlen angesaugt wird und die Zeit für die Reaktion des Sauerstoffes mit dem Kohlenmonoxid möglichst lang ist.

Darüber hinaus kann vorgesehen sein, oberhalb der Brenner 16 - 26 weitere Brenner 28, z.B. je zwei Brenner in zwei weiteren Ebenen, vorzusehen, die in derselben Weise eingebaut sind wie die Brenner 16 - 26. Die Brenner 28 sind zweckmäßigerweise jedoch in horizontaler Richtung relativ zu den Brennern 22, 18, 26 um deren halben Mittenabstand versetzt angeordnet.

Durch diese zusätzlichen Brenner 28 können Abgas-Strähnen, die durch die unteren Brennergruppen noch nicht erfaßt worden sind, durchgemischt werden, wodurch die Reaktion von CO mit O₂ weiter verbessert wird.

Die Brenner selbst, die handelsüblich käuflich sind, können beispielsweise mit Propangas betrieben werden.

## Patentansprüche

1. Vorrichtung zur Verbrennung von Haus- und Sondermüll, mit einem Drohrohrofen (10), der in einen Abhitzekessel (12, 14) einmündet, wobei zwischen dem Außenumfang des Drehrohrofens (10) und der Öffnung im Abhitzekessel (12, 14) ein Ringspalt für die Zufuhr von Sekundärluft in den Kessel vorhanden ist, und einer dem Abhitzekessel (12, 14) nachgeschalteten Reinigungsanlage für die Abgase,
dadurch **gekennzeichnet,** daß
im Kessel (12, 14) oberhalb des Austrittes des Drehrohrofens (10) in den Kessel eine Mehrzahl von Hochgeschwindigkeitsbrennern (16-26) eingebaut ist, deren Ausstromdüsen (30) ins Innere des Kessels (12, 14) gerichtet sind.

2. Vorrichtung nach Anspruch 1, dadurch gekennzeichnet, daß die Brenner (16-26) unmittelbar oberhalb des Austrittes des Drehrohrofens (10) in den Kessel (12, 14) angeordnet sind.

3. Vorrichtung nach Anspruch 1 oder 2, dadurch gekennzeichnet, daß die Brenner (16-26) in zwei sich gegenüberliegenden Seitenwänden (36, 38) des Kessels (12,14) aufeinander zu gerichtet eingebaut sind.

4. Vorrichtung nach Anspruch 1, 2 oder 3, dadurch gekennzeichnet, daß die Brenner (16-26) in mehreren vertikal übereinanderliegenden Ebenen angeordnet sind.

5. Vorrichtung nach einem der Ansprüche 1 bis 4, dadurch gekennzeichnet, daß die Ausströmdüsen (30) der Brenner (16-26) im wesentlichen horizontal verlaufen.

6. Vorrichtung nach einem der Ansprüche 3 bis 5, dadurch gekennzeichnet, daß die in den beiden Seitenwänden (36, 38) des Kessels sich gegenüberliegend eingebauten Brenner höhenversetzt zueinander angeordnet sind.

7. Vorrichtung nach einem der Ansprüche 3 bis 6, dadurch gekennzeichnet, daß die jeweils in einer Wand (36 bzw. 38) des Kessels eingebauten Brenner (16-26) alternierend höhenversetzt zueinander angeordnet sind.

8. Vorrichtung nach einem der Ansprüche 1 bis 7, dadurch gekennzeichnet, daß der horizontale und der vertikale Abstand der Brenner voneinander etwa dem Durchmesser der Strahlkegel (32) der Verbrennungsgase der Brenner in der Mitte des Kessels (12, 14) entspricht.

9. Vorrichtung nach einem der Ansprüche 1 bis 8, dadurch gekennzeichnet, daß im Kessel (12, 14) oberhalb des Brenners 16-26) weitere Brenner (28) eingebaut sind, die horizontal zu den Brennern (16-26) um deren halben Mittenabstand versetzt angeordnet sind.

## Claims

1. Device for the combustion of municipal and industrial waste, having a rotary tube furnace (10), which feeds into a waste-heat boiler (12, 14), wherein an annular gap is present between the outer surface of the rotary tube furnace (10) and the opening in the waste-heat boiler (12, 14) for the input of secondary air into the boiler, and a scrubbing installation for the waste gases downstream of the waste-heat boiler (12, 14)
thereby **characterized**, that
in the boiler (12, 14) above the exit from the rotary tube furnace there is built in a plurality of high speed burners (16-26), the discharge nozzles (3) of which are directed towards the inside of boiler (12, 14).

2. Device according to claim 1, thereby characterized, that the burners (16-26) are arranged directly above the exit from the rotary tube furnace (10) in the boiler (12, 14).

3. Device according to claim 1 or 2, thereby characterized, that the burners (16-26) are incorporated in two facing side-walls (36, 38) of the boiler (12, 14) directed towards one another.

4. Device according to any of claims 1, 2 or 3, thereby characterized, that the burners (16-26) are arranged in several layers vertically above one another.

5. Device according to any of claims 1 to 4, thereby characterized, that the discharge nozzles (30) of the burners (16-26) are substantially horizontal .

6. Device according to any of claims 3 to 5, thereby characterized, that the opposing burners incorporated in the two side-walls (36, 38) of the boiler are arranged vertically offset from one another.

7. Device according to any of claims 3 to 6, thereby characterized, that the respective burners (16-26) incorporated in each of the walls (36 or 38) of the boiler are arranged alternately vertically offset to one another.

8. Device according to any of claims 1 to 7, thereby characterized, that the horizontal and the vertical spacing of the burners from one another corresponds approximately to the diameter of the jet cone (32) of the combustion gases from the burner in the middle of the boiler (12, 14).

9. Device according to any of claims 1 to 8, thereby characterized, that further burners (2) are incorporated in the boiler (12, 14) above the burners (16-26) which are arranged horizontally to the burners (16-26), offset therefrom by half their centre-spacing.

## Revendications

1. Dispositif pour la combustion de déchets ménagers et industriels comportant un four rotatif (10) qui débouche dans une chaudière de récupération (12, 14), entre le périmètre du four rotatif (10) et l'ouverture dans la chaudière de récupération (12, 14) étant prévue une chambre annulaire pour l'arrivée de l'air secondaire dans la chaudière, et une installation de purification pour des gaz d'échappement qui est intercalée en aval de la chaudière de récupération, caractérisé en ce que, dans la chaudière (12, 14), en amont de la sortie du four rotatif (10) vers la chaudière, est installée une pluralité de brûleurs à grande vitesse (16-26) dont les tuyéres d'éjection (30) sont dirigées vers l'intérieur de la chaudière (12, 14).

2. Dispositif suivant la revendication 1, caractérisé en ce que les brûleurs (16-26) soit disposés directement en amont de la sortie du four rotatif (10) vers la chaudière (12, 14).

3. Dispositif suivant la revendication 1 ou 2, caractérisé en ce que les brûleurs (16-26) sont montés dans deux parois latérales opposées (36, 38) de la chaudière (12, 14) dirigés les uns au-dessus des autres.

4. Dispositif suivant la revendication 1, 2 ou 3, caractérisé en ce que les brûleurs (16-26) sont disposés dans plusieurs plans verticaux superposés.

5. Dispositif suivant l'une des revendications 1 à 4, caractérisé en ce que les tuyères d'éjection (30) des brûleurs (16-26) sont essentiellement horizontales.

6. Dispositif suivant l'une des revendications 3 à 5 caractérisé en ce que les brûleurs, qui se font face, montés dans les deux parois latérales (36, 38) de la chaudière sont disposés les uns vers les autres, décalés en hauteur.

7. Dispositif suivant l'une des revendications 3 à 6, caractérisé en ce que les brûleurs (16-26) respectivement montés dans une paroi (36 ou 38) de la chaudière sont disposés les uns vers les décalés alternativement en hauteur.

8. Dispositif suivant l'une des revendications 1 à 7 caractérisé en ce que la distance horizontale et verticale des brûleurs l'un de l'autre correspond à peu près au diamètre du cône de rayonnement (32) des gaz brûlés des brûleurs, au milieu de la chaudière (12, 14).

9. Dispositif suivant l'une des revendications 1 à 8, caractérisé en ce que, dans la chaudière (12, 14) en amont des brûleurs (16-26) sont montés d'autres brûleurs (28) qui sont disposés vers les brûleurs (16-26), décalés horizontalement de la moitié d'une distance de centre à centre.
